# FASCICULE DE BREVET EUROPEEN

(11) **EP 1 989 854 B1**
(45) Date de publication et mention de la délivrance du brevet: **22.07.2015**
(21) Numéro de dépôt: 06842158.5
(22) Date de dépôt: 13.12.2006
(51) Int. Cl.: H04L 29/06, H04L 29/08, G10L 19/008

(54) **PROCEDE DE DETERMINATION D'UN MODE D'ENCODAGE SPATIAL DE DONNEES AUDIO**
VERFAHREN ZUR BESTIMMUNG EINES RÄUMLICHEN CODIERUNGSMODUS VON AUDIODATEN
METHOD FOR DETERMINING AN AUDIO DATA SPATIAL ENCODING MODE

(30) Priorité: 27.12.2005 FR 0554106
(43) Date de publication de la demande: 12.11.2008
(73) Titulaire: Orange, 75015 Paris (FR)
(72) Inventeur: NAGLE, Arnault, F-22300 Lannion (FR); SOLLAUD, Aurélien, F-22560 Trebeurden (FR); BRIAND, Manuel c/o Marcia Rodeiro, 18268 Djursholm (SE)
(74) Mandataire: de la Fouchardière, Marie-Noëlle
(86) Numéro de dépôt international: PCT/FR2006/051348
(87) Numéro de publication internationale: WO 2007/074269

(56) Documents cités:
- US-A1- 2003 063 574
- US-A1- 2005 157 660
- SCHULZRINNE COLUMBIA UNIVERSITY S CASNER PACKET DESIGN H: "RTP Profile for Audio and Video Conferences with Minimal Control; rfc3551.txt;" IETF STANDARD, INTERNET ENGINEERING TASK FORCE, IETF, CH, juillet 2003 (2003-07), XP015009333 ISSN: 0000-0003
- CHUN-GEUN KIM; SANG CHUL AHN; IG-JAE KIM; HYOUNG-GON KIM: "3-dimensional voice communication system for two user groups" ADVANCED COMMUNICATION TECHNOLOGY, 2005, ICACT 2005. THE 7TH INTERNATIONAL CONFERENCE ON PHOENIX PARK, KOREA FEB. 21-23, 2005, PISCATAWAY, NJ, USA,IEEE, 21 février 2005 (2005-02-21), pages 1-6, XP010813570
- PETER NOLL: "MPEG Digital Audio Coding - Setting the Standard for High-Quality Audio Compression" IEEE SIGNAL PROCESSING MAGAZINE, septembre 1997 (1997-09), pages 59-81, XP011089788

## Description

La présente invention concerne un procédé de détermination d'un mode d'encodage spatial de données audio.

L'invention trouve application dans le contexte général du développement de services audio utilisant le protocole IP (« Internet Protocol »), appelé génériquement Voix sur IP ou VoIP (« Voice over IP »).

L'invention peut être mise en oeuvre sur des réseaux de transport de données par commutation de paquets, comme le réseau Internet, utilisant des protocoles de signalisation spécifiques VoIP pour contrôler la gestion des appels, tels que le protocole SIP (« Session Initiation Protocol »), ainsi que des protocoles de transport de données en temps réel pour transporter les données audio, le protocole RTP (« Real Time Transfer Protocol ») par exemple.

Une application particulièrement avantageuse de l'invention concerne les conférences audio en VoIP avec rendu spatial du son pour chaque participant.

Dans le cadre des conférences audio, plusieurs configurations d'échanges de flux audio peuvent être envisagées :
- les liaisons multipoint en mode centralisé dans lesquelles une entité émettrice, généralement appelée « pont », gère dans le réseau les flux audio à destination des terminaux récepteurs des participants,
- les liaisons multipoint en mode distribué dans lesquelles chaque terminal est chargé de recevoir, de traiter les flux audio qu'il reçoit des terminaux des autres participants et d'émettre son flux audio vers ces derniers,
- les liaisons point à point où seuls deux terminaux sont en communication, chacun jouant le rôle d'entité émettrice et de terminal récepteur.

Actuellement, les participants à une conférence audio peuvent disposer sur leur terminal de plusieurs formats possibles de restitution d'écoute avec rendu spatialisé du son. On peut citer par exemple les formats suivants :
- le format binaural d'écoute spatialisée en 3D au casque,
- le format stéréo-dipôle.d'écoute spatialisée en 3D sur deux haut-parleurs,
- le format ambisonique d'écoute spatialisée en 2D ou 3D sur plusieurs haut-parleurs,
- les formats audio multicanaux (5.1, 7.1, etc.) d'écoute spatialisée en 2D sur plusieurs haut-parleurs.

Par ailleurs, lors d'une conférence audio par exemple, l'entité émettrice, telle que le pont d'une liaison multipoint centralisée, est chargée d'encoder spatialement les flux audio reçus de manière à générer une scène sonore virtuelle audio en 2D, dans le plan horizontal, ou en 3D, dans l'espace. A cet effet, l'entité émettrice met en oeuvre un mode particulier d'encodage spatial des données audio qui peut être le mode d'encodage binaural, stéréo-dipôle, etc. Les flux audio ainsi encodés spatialement par l'entité émettrice sont ensuite transmis vers les terminaux récepteurs au travers de codeurs-décodeurs (codecs) audio dont le choix résulte d'une procédure classique de négociation en VoIP. Les codecs audio disponibles aujourd'hui sont les codecs audio monophoniques et stéréophoniques.

Il est donc possible de transmettre, par exemple, un son spatialisé par encodage spatial binaural ou stéréo-dipôle à l'aide d'un codec audio stéréophonique. Cependant, le terminal récepteur n'a pas la possibilité d'identifier le contenu spatial des données, à savoir binaural ou stéréo-dipôle par exemple. En effet, actuellement, les données audio spatialisées codées par les codecs audio existants sont prises en compte au même titre qu'un flux audio ordinaire, mono ou stéréo, sans information spatiale.

La demande de brevet américain 2002/0138108 illustre bien cette situation dans le cas où une entité émettrice constituée par un pont ne tient compte que de la manière dont vont être répartis spatialement les différents participants à la conférence audio, suivant des images audio particulières à chaque participant ou commune à tous, mais sans savoir quel format d'encodage spatial utiliser, binaural, stéréo-dipôle, ambisonique, etc.

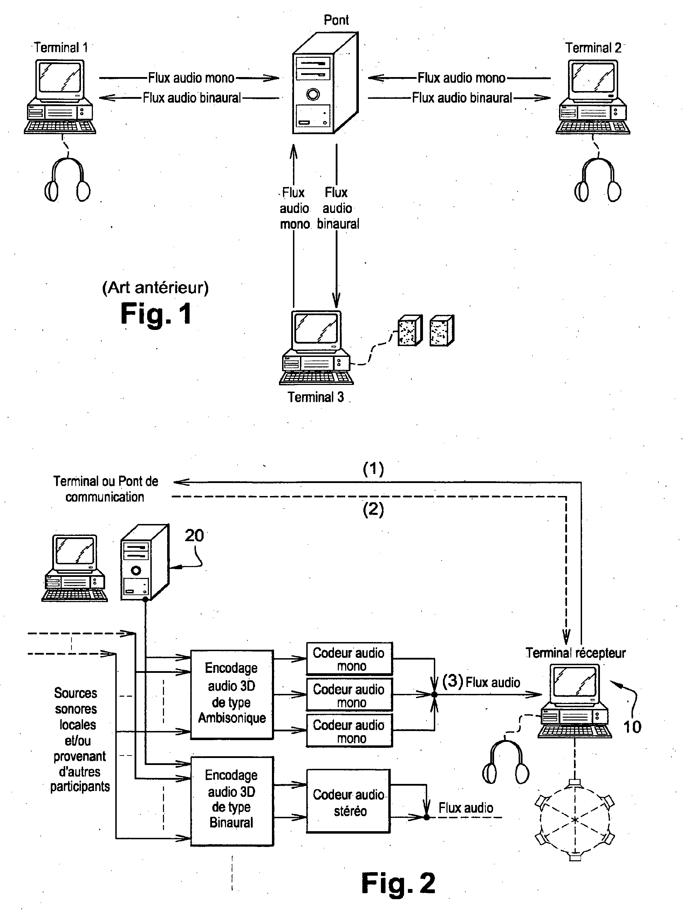

Les difficultés qui se posent alors sont décrites sur la figure 1 qui est un schéma des échanges de flux lors d'une liaison multipoint centralisée, selon l'art antérieur.

La figure 1 met en présence un pont jouant le rôle d'entité émettrice ainsi que trois terminaux récepteurs qui transmettent leur propre flux audio au pont selon un codage audio monophonique. Le pont décode les flux audio reçus, puis réalise un encodage spatial suivant, par exemple, le mode d'encodage spatial binaural.

Par ailleurs, les terminaux 1 et 2 sont équipés d'un casque adéquat à l'écoute des signaux binauraux, tandis que le terminal 3 est équipé de deux haut-parleurs pour une restitution au format stéréo-dipôle.

On constate que, dans ce cas, le mode d'encodage spatial binaural retenu arbitrairement par le pont n'est pas directement compatible avec le format de restitution stéréo-dipôle utilisé par le terminal 3. Ce terminal doit alors transformer l'encodage binaural en stéréo-dipôle, ce qui se traduit par un coût, en charge CPU et retard, au niveau de l'unité centrale du terminal.

On comprend que, d'une façon générale, les difficultés présentées en référence à la figure 1 proviennent du fait qu'un terminal récepteur, comme un ordinateur personnel PC, peut disposer de plusieurs périphériques, tels qu'un casque, des haut-parleurs en nombre quelconque, etc., associés à des formats de restitution différents, et que, par ailleurs, les applications distantes installées sur une entité émettrice reliée au terminal par le réseau soient amenées à faire des choix arbitraires d'encodage spatial, indépendants du format de restitution configuré par l'utilisateur du terminal récepteur.

Le document de brevet US 2003/0063574 se rapporte à un système de conférence téléphonique comprenant un pont de conférence dont la fonction est de combiner les signaux audio provenant de plusieurs terminaux et de transmettre le signal combiné à au moins un terminal en utilisant au moins un codec de transmission. Le pont de conférence comprend un moyen de spatialisation apte à créer un effet spatial. Le nombre de composants audio, tels que des signaux de parole, est déterminé à partir des signaux audio présent aux entrées du pont de conférence. Ensuite, au moins un codec est sélectionné pour être utilisé, en fonction du nombre de composants audio actifs simultanément et le signal combiné est transmis vers au moins un terminal en utilisant le codec sélectionné.

Aussi, le problème technique à résoudre par l'objet de la présente invention est de proposer un procédé de détermination d'un mode d'encodage spatial de données audio émises par au moins une entité émettrice vers un terminal récepteur apte à recevoir lesdites données audio selon au moins un format de restitution. Le mode d'encodage spatial déterminé, par exemple au niveau d'un pont, ainsi que la négociation du codec audio correspondant, pourraient ainsi tenir compte du format de restitution souhaité, afin d'optimiser le rendu sonore spatialisé et, surtout, de diminuer les calculs qui découleraient d'un mauvais choix de format. Par exemple, comme on vient de le voir, l'envoi d'un flux spatialisé en mode binaural sur un PC non muni d'un casque nécessiterait une transformation vers un format spatialisé de restitution sur deux haut-parleurs, stéréo-dipôle par exemple.

La solution au problème technique posé consiste, selon la présente invention, en ce que ledit procédé comprend les étapes consistant :
- pour le terminal récepteur, à indiquer à l'entité émettrice ledit au moins un format de restitution selon un ordre de préférence donné,
- pour l'entité émettrice, à déterminer un mode d'encodage spatial des données audio compatible avec un format de restitution pris dans l'ordre de préférence, et à indiquer au terminal récepteur ledit format de restitution.

Ainsi, le procédé conforme à l'invention consiste en substance à informer l'entité émettrice des formats de restitution disponibles au niveau du terminal récepteur et donc à permettre à ladite entité émettrice de déterminer et mettre en oeuvre un mode d'encodage spatial adapté à l'un de ces formats. En retour, l'entité émettrice informe le terminal récepteur du format de restitution sur lequel il pourra recevoir le flux audio codé selon le mode d'encodage spatial ainsi déterminé.

Les avantages présentés par le procédé, objet de l'invention, sont les suivants :
- possibilité d'optimiser le rendu audio spatialisé en fonction des formats de restitution des terminaux récepteurs et du choix de l'utilisateur ou du terminal, à savoir homogénéité de la qualité du rendu sonore, tous les terminaux étant correctement spatialisés, et amélioration de la qualité de spatialisation car cette dernière est homogène du fait que le terminal n'utilise pas une spatialisation différente,
- choix du codec audio le plus adapté au format de restitution choisi par l'utilisateur ou du terminal,
- diminution de la charge de calcul lors du décodage spatial au niveau des terminaux récepteurs du fait qu'il n'est pas nécessaire de passer d'un format de restitution à un autre.

De façon pratique, le terminal récepteur indique ledit au moins un format de restitution et ledit ordre de préférence dans un message envoyé à l'entité émettrice, et ladite entité émettrice indique le format de restitution à utiliser dans un message de réponse envoyé au terminal récepteur.

Comme, dans le cas de liaison point à point par exemple, une entité émettrice peut également jouer le rôle de terminal récepteur et inversement, l'invention prévoit que l'entité émettrice indique également dans ledit message de réponse au moins un format de restitution selon un ordre de préférence donné, et que ledit terminal récepteur indique le format de restitution à utiliser dans un message de réponse envoyé à l'entité émettrice.

Selon un mode de réalisation du procédé conforme à l'invention, l'entité émettrice et le terminal récepteur échangent des informations concernant les formats de restitution dans des messages de signalisation.

Plus particulièrement, lesdits messages de signalisation sont des messages utilisant le protocole de signalisation SIP.

L'invention concerne également un message d'un terminal récepteur destiné à recevoir selon au moins un format de restitution des données audio émises par une entité émettrice destinée à émettre des données audio spatialisées, remarquable en ce que ledit message comporte une indication dudit au moins un format de restitution selon un ordre de préférence donné.

De même, l'invention concerne un message de réponse de l'entité émettrice au message du terminal récepteur, remarquable en ce que ledit message de réponse comporte une indication du format de restitution à utiliser par le terminal récepteur.

Selon l'invention, ledit message de réponse comporte également une indication d'au moins un format de restitution de l'entité émettrice, selon un ordre de préférence donné.

Bien entendu, à ce message de réponse, le terminal récepteur répond à son tour à l'entité émettrice en indiquant le format de restitution à utiliser.

La description qui va suivre en regard des dessins annexés, donnés à titre d'exemples non limitatifs, fera bien comprendre en quoi consiste l'invention et comment elle peut être réalisée.
La figure 2 est un schéma illustrant la transmission selon le procédé de l'invention d'une scène audio spatialisée entre une entité émettrice et un terminal récepteur.
La figure 3 est un schéma des échanges de flux lors d'une liaison multipoint centralisée selon l'invention.
La figure 4 est un schéma montrant les échanges de messages SIP entre une entité émettrice et un terminal récepteur lors de la mise en oeuvre de l'invention.
La figure 5 est un exemple de contenu du message SIP INVITE représenté sur la figure 4.
La figure 6 est un exemple de contenu du message SIP 200 OK représenté sur la figure 4.
La figure 7 est un exemple de contenu du message SIP ACK représenté sur la figure 4.
La figure 8 est un exemple de contenu SDP d'un message SIP pour l'échange de capacité entre deux terminaux.

Sur la figure 2 est représenté un terminal récepteur 10 qui dispose de deux formats de restitution spatiale de données audio spatialisées fournies par une entité émettrice 20, un pont ou un autre terminal. Ces formats sont respectivement le format ambisonique associé à une écoute sur un ensemble de six haut-parleurs et le format binaural associé à une écoute au casque. La préférence de l'utilisateur est de recevoir les flux audio au format ambisonique.

A cet effet, l'utilisateur envoie (1) à destination de l'entité émettrice 20 un message de signalisation SIP qui sera décrit en détail plus loin, dans lequel est indiqué que le terminal récepteur 10 peut recevoir les flux audio selon les formats ambisonique et binaural avec une préférence pour le format ambisonique.

On supposera que l'entité émettrice distante 20 peut encoder spatialement en mode ambisonique une scène sonore composée de sources sonores locales ou provenant d'autres participants à une conférence audio par exemple.

L'entité émettrice 20 envoie (3) donc au terminal récepteur 10 les différents canaux ambisoniques, chacun codé par un codeur monophonique, puis multiplexés afin d'être transmis sur le réseau comme un flux unique. L'entité distante 20 indique (2) ensuite au terminal récepteur 10 que les données contenues dans les canaux monophoniques sont encodées spatialement en mode ambisonique, afin que le terminal sache les traiter comme telles et utiliser un décodage spatial adapté à la restitution au format ambisonique sur les six haut-parleurs.

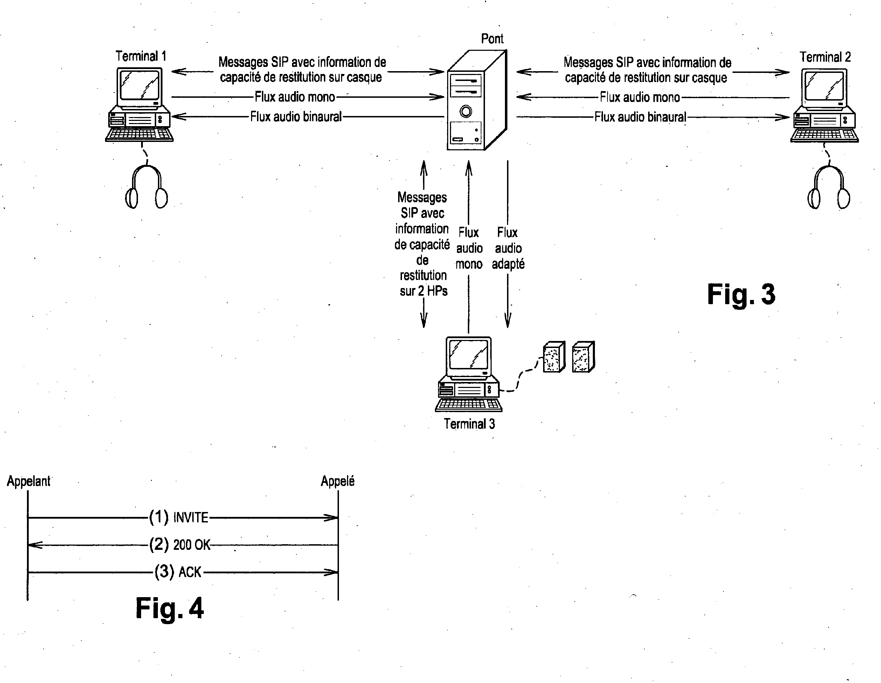

La figure 3 reprend dans le contexte de l'invention, telle qu'elle vient d'être définie, l'exemple de situation de la figure 1 relative à l'art antérieur. Le pont tient compte ici des informations reçues concernant les formats de restitution des terminaux pour déterminer le mode d'encodage spatial à utiliser et générer une scène sonore pour chaque terminal dans le format de restitution souhaité, à partir des flux audio monophoniques issus des autres terminaux.

Plus précisément sur la figure 3, le terminal 3 ayant informé dans les messages de signalisation SIP qu'il souhaite écouter au format stéréo-dipôle le son spatialisé reçu, le pont lui envoie le flux audio adapté au format stéréo-dipôle après avoir interprété l'information contenue dans les messages SIP.

En résumé, le procédé conforme à l'invention consiste donc à inclure des informations concernant les formats de restitution des terminaux présentées selon un ordre de préférence donné, afin qu'une autre entité, comme un pont, puisse en tenir compte pour déterminer l'encodage spatial à utiliser. Cette entité doit aussi pouvoir indiquer aux terminaux le choix qu'elle a effectué. Dans le cas de la Voix sur IP, ces informations sont à inclure dans les échanges de messages de signalisation de type SIP ou H.323, etc.

Sur la figure 4 sont représentés les messages SIP pour la création d'un appel qui peuvent être utilisés pour implémenter l'invention.

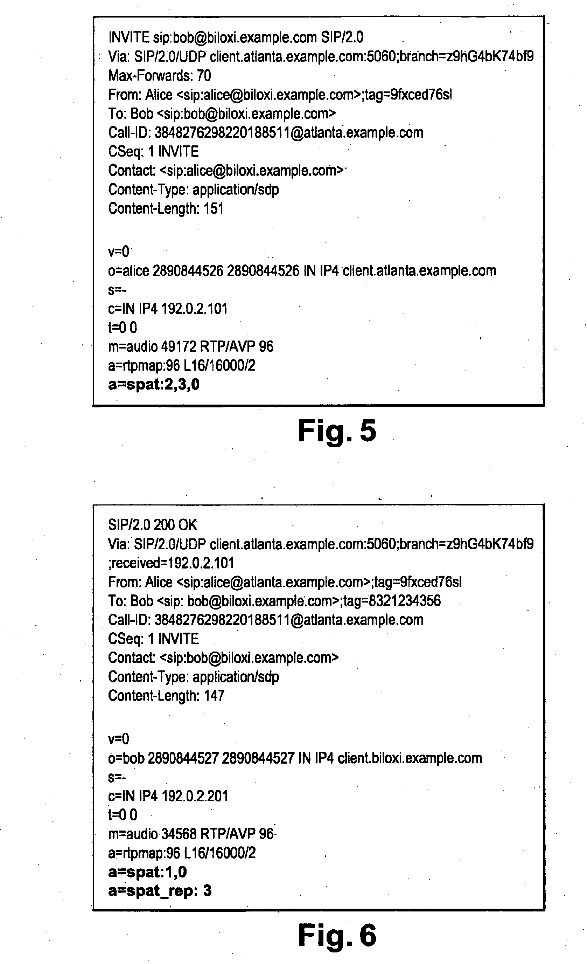

Le message INVITE entre une entité appelante et une entité appelée peut être utilisé par un terminal récepteur pour inclure les informations concernant ses formats de restitution et les communiquer à l'entité émettrice. De façon pratique, la figure 5 montre qu'à cet effet un attribut est créé dans la partie SDP (« Session Description Protocol ») du message au niveau média, c'est-à-dire pour chaque définition du flux audio par une ligne «m = audio». Cet attribut constitué ici par un en-tête «a = spat :» indique les différents formats de restitution du terminal ainsi que l'ordre de préférence, ces informations pouvant être spécifiées par le terminal ou directement par son utilisateur.

L'en-tête «a = spat :» peut avoir par exemple pour argument :
- 0 lorsque aucune spatialisation n'est souhaitée,
- 1 lorsqu'une spatialisation binaurale est souhaitée,
- 2 lorsqu'une spatialisation stéréo-dipôle est souhaitée,
- 3 lorsqu'une spatialisation ambisonique est souhaitée.

Ces valeurs peuvent être normalisées et définies dans une table de correspondance pour que les associations soient connues de tous. L'ordre exprimé dans l'en-tête «a = spat :» peut être l'ordre de préférence des formats.

Ainsi, le message SIP INVITE de la figure 5 exprime que les formats de restitution souhaités sont, dans l'ordre, le format stéréo-dipôle, le format ambisonique et l'absence de spatialisation.

A la proposition envoyée par l'entité appelante, c'est-à-dire le terminal récepteur, dans le message SIP INVITE, l'entité appelée, c'est-à-dire l'entité émettrice, répond par un message SIP 200 OK représenté sur la figure 6. Ce message contient dans sa partie SDP deux types d'informations, à savoir, d'une part, l'indication contenue dans l'en-tête «a = spat_rep :» que les données audio envoyées par l'entité appelée à l'entité appelante seront codées spatialement pour le format de restitution ambisonique, et, d'autre part, si l'entité appelée est elle-même un terminal récepteur, l'offre SDP de l'entité appelée spécifiant dans l'en-tête «a = spat :» que les formats désirés sont, dans l'ordre, le format binaural et l'absence de spatialisation.

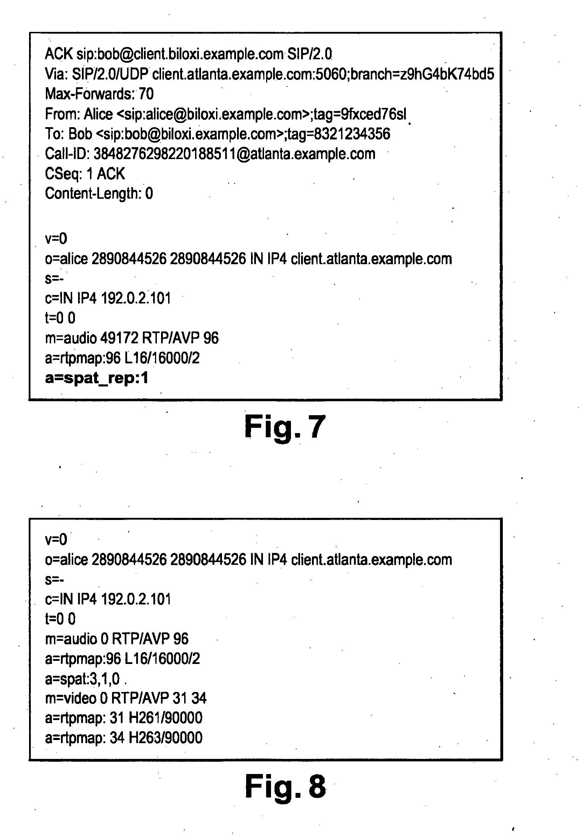

Enfin, le message SIP ACK de la figure 7 contient la réponse de l'entité appelante à l'offre de l'unité appelée spécifiée dans l'en-tête «a = spat :» du message SIP 200 OK précédent. Dans l'exemple choisi, la partie SDP du message SIP ACK précise dans l'en-tête «a = spat_rep :» que les données codées envoyées par l'entité appelante seront codées spatialement au format binaural, conformément au choix prioritaire de l'entité appelée.

Alternativement, il est possible d'utiliser la même séquence de messages mais en utilisant le mode "échange de capacité" disponible sous SDP, comme l'illustre la figure 8. Chaque terminal peut donc échanger à blanc, c'est-à-dire sans échange de flux audio, en spécifiant les flux audio spatialisés qu'il peut traiter. Le terminal ayant émis le message de la figure 8 indique qu'il souhaite de manière préférentielle recevoir des flux audio spatialisés sous le format ambisonique, le format binaural et, dans le dernier cas, des flux sans spatialisation.

De même, il est possible en variante de définir par exemple, toujours en signalisation SIP, un « package » XML comprenant les différents formats de restitution normalisés (binaural, ...). Ces informations pourraient être aussi spécifiées par le terminal ou directement par l'utilisateur.

## Revendications

1. Procédé de détermination d'un mode d'encodage spatial de données audio émises par au moins une entité émettrice (20) vers un terminal récepteur (10) apte à recevoir lesdites données audio selon au moins un format de restitution d'écoute, **caractérisé en ce que** ledit procédé comprend les étapes consistant:
- pour le terminal récepteur (10), à indiquer (1) à l'entité émettrice (20) ledit au moins un format de restitution selon un ordre de préférence donné,
- pour l'entité émettrice (20), à déterminer un mode d'encodage spatial des données audio compatible avec un format de restitution indiqué par le terminal récepteur et pris dans l'ordre de préférence, et à indiquer (2) au terminal récepteur (10) ledit format de restitution compatible avec le mode d'encodage spatial déterminé.

2. Procédé selon la revendication 1, **caractérisé en ce que** ladite entité émettrice est un pont dans une liaison multipoint centralisée.

3. Procédé selon la revendication 1, **caractérisé en ce que** ladite entité émettrice est un terminal dans une liaison point à point ou multipoint distribuée.

4. Procédé selon l'une des revendications 1 à 3, **caractérisé en ce que** le terminal récepteur indique ledit au moins un format de restitution et ledit ordre de préférence dans un message envoyé à l'entité émettrice, et **en ce que** ladite entité émettrice indique le format de restitution à utiliser dans un message de réponse envoyé au terminal récepteur.

5. Procédé selon les revendications 3 et 4, **caractérisé en ce que** l'entité émettrice indique également dans ledit message de réponse au moins un format de restitution selon un ordre de préférence donné, et **en ce que** ledit terminal récepteur indique le format de restitution à utiliser dans un message de réponse envoyé à l'entité émettrice.

6. Procédé selon l'une des revendications 4 ou 5, **caractérisé en ce que** lesdits messages sont des messages de signalisation.

7. Procédé selon la revendication 6, **caractérisé en ce que** lesdits messages de signalisation sont des messages utilisant le protocole de signalisation SIP.

8. Terminal récepteur adapté pour la mise en oeuvre d'un procédé selon l'une quelconque des revendications 1 à 7, ledit terminal étant apte à recevoir selon au moins un format de restitution d'écoute des données audio spatialisées émises par une entité émettrice, **caractérisé en ce que** ledit terminal récepteur est apte à indiquer à ladite entité émettrice ledit au moins un format de restitution selon un ordre de préférence donné et à recevoir une indication d'un format de restitution indiqué par le terminal récepteur, ledit format de restitution étant pris dans l'ordre de préférence et compatible avec un mode d'encodage spatial déterminé par ladite entité émettrice.

9. Entité émettrice adaptée pour la mise en oeuvre d'un procédé selon l'une quelconque des revendications 1 à 7, ladite entité émettrice étant apte à émettre des données audio spatialisées vers un terminal récepteur apte à recevoir lesdites données audio spatialisées selon au moins un format de restitution d'écoute, **caractérisée en ce que** ladite entité émettrice est apte à recevoir en provenance dudit terminal récepteur, une indication dudit au moins un format de restitution, à déterminer un mode d'encodage spatial des données compatible avec un format de restitution indiqué et pris dans l'ordre de préférence, et à indiquer au terminal récepteur ledit format de restitution compatible avec le mode d'encodage spatial déterminé.

## Patentansprüche

1. Verfahren zur Bestimmung eines räumlichen Codiermodus von Audiodaten, die von mindestens einer Sendeentität (20) an ein Empfangsendgerät (10) gesendet werden, das die Audiodaten gemäß mindestens einem Hörwiedergabeformat empfangen kann, **dadurch gekennzeichnet, dass** das Verfahren die Schritte enthält, die darin bestehen:
- für das Empfangsendgerät (10), der Sendeentität (20) das mindestens eine Wiedergabeformat gemäß einer gegebenen bevorzugten Reihenfolge anzugeben (1),
- für die Sendeentität (20), einen räumlichen Codiermodus der Audiodaten zu bestimmen, der mit einem vom Empfangsendgerät angegebenen und in der bevorzugten Reihenfolge genutzten Wiedergabeformat kompatibel ist, und dem Empfangsendgerät (10) das mit dem bestimmten räumlichen Codiermodus kompatible Wiedergabeformat anzugeben (2).

2. Verfahren nach Anspruch 1, **dadurch gekennzeichnet, dass** die Sendeentität eine Brücke in einer zentralisierten Mehrpunktverbindung ist.

3. Verfahren nach Anspruch 1, **dadurch gekennzeichnet, dass** die Sendeentität ein Endgerät in einer verteilten Punkt-zu-Punkt- oder Mehrpunkt-Verbindung ist.

4. Verfahren nach einem der Ansprüche 1 bis 3, **dadurch gekennzeichnet, dass** das Empfangsendgerät das mindestens eine Wiedergabeformat und die bevorzugte Reihenfolge in einer an die Sendeentität gesendeten Mitteilung angibt, und dass die Sendeentität das zu verwendende Wiedergabeformat in einer an das Empfangsendgerät gesendeten Antwortmitteilung angibt.

5. Verfahren nach den Ansprüchen 3 und 4, **dadurch gekennzeichnet, dass** die Sendeentität in der Antwortmitteilung ebenfalls mindestens ein Wiedergabeformat gemäß einer gegebenen bevorzugten Reihenfolge angibt, und dass das Empfangsendgerät das zu verwendende Wiedergabeformat in einer an die Sendeentität gesendeten Antwortmitteilung angibt.

6. Verfahren nach einem der Ansprüche 4 oder 5, **dadurch gekennzeichnet, dass** die Mitteilungen Signalisierungsmitteilungen sind.

7. Verfahren nach Anspruch 6, **dadurch gekennzeichnet, dass** die Signalisierungsmitteilungen Mitteilungen sind, die das Signalisierungsprotokoll SIP verwenden.

8. Empfangsendgerät, das für die Durchführung eines Verfahrens nach einem der Ansprüche 1 bis 7 geeignet ist, wobei das Endgerät von einer Sendeentität gesendete raumangepasste Audiodaten gemäß mindestens einem Hörwiedergabeformat empfangen kann, **dadurch gekennzeichnet, dass** das Empfangsendgerät der Sendeentität das mindestens eine Wiedergabeformat gemäß einer gegebenen bevorzugten Reihenfolge angeben und eine Angabe eines vom Empfangsendgerät angegebenen Wiedergabeformats empfangen kann, wobei das Wiedergabeformat in der bevorzugten Reihenfolge genutzt wird und mit einem durch die Sendeentität bestimmten räumlichen Codiermodus kompatibel ist.

9. Sendeentität, die für die Durchführung eines Verfahrens nach einem der Ansprüche 1 bis 7 geeignet ist, wobei die Sendeentität raumangepasste Audiodaten an ein Empfangsendgerät senden kann, das die raumangepassten Audiodaten gemäß mindestens einem Hörwiedergabeformat empfangen kann, **dadurch gekennzeichnet, dass** die Sendeentität vom Empfangsendgerät kommend eine Angabe des mindestens einen Wiedergabeformats empfangen kann, einen räumlichen Codiermodus der Daten bestimmen kann, der mit einem in der bevorzugten Reihenfolge angegebenen und genutzten Wiedergabeformat kompatibel ist, und dem Empfangsendgerät das mit dem bestimmten räumlichen Codiermodus kompatible Wiedergabeformat angeben kann.

## Claims

1. Method of determining a mode of spatial encoding of audio data emitted by at least one emitter entity (20) towards a receiver terminal (10) able to receive said audio data according to at least one reproduction format, **characterized in that** said method comprises the steps consisting:
- for the receiver terminal (10), in indicating (1) to the emitter entity (20) said at least one reproduction format according to a given order of preference,
- for the emitter entity (20), in determining a mode of spatial encoding of the audio data which is compatible with a reproduction format indicated by the receiver terminal and taken in the order of preference, and in indicating (2) to the receiver terminal (10) said reproduction format compatible with the mode of spatial encoding determined.

2. Method according to Claim 1, **characterized in that** said emitter entity is a bridge in a centralized multipoint link.

3. Method according to Claim 1, **characterized in that** said emitter entity is a terminal in a point-to-point or distributed multipoint link.

4. Method according to one of Claims 1 to 3, **characterized in that** the receiver terminal indicates said at least one reproduction format and said order of preference in a message dispatched to the emitter entity, and **in that** said emitter entity indicates the reproduction format to be used in a response message dispatched to the receiver terminal.

5. Method according to Claims 3 and 4, **characterized in that** the emitter entity also indicates in said response message at least one reproduction format according to a given order of preference, and **in that** said receiver terminal indicates the reproduction format to be used in a response message dispatched to the emitter entity.

6. Method according to one of Claims 4 or 5, **characterized in that** said messages are signalling messages.

7. Method according to Claim 6, **characterized in that** said signalling messages are messages using the SIP signalling protocol.

8. Receiver terminal suitable for the implementation of a method according to any one of Claims 1 to 7, said terminal being able to receive according to at least one reproduction format spatialized audio data emitted by an emitter entity, **characterized in that** said receiver terminal is able to indicate to said emitter entity said at least one reproduction format according to a given order of preference and to receive an indication of a reproduction format indicated by the receiver terminal, said reproduction format being taken in the order of preference and compatible with a mode of spatial encoding determined by said emitter entity.

9. Emitter entity suitable for the implementation of a method according to any one of Claims 1 to 7, said emitter entity being able to emit spatialized audio data towards a receiver terminal able to receive said spatialized audio data according to at least one reproduction format, **characterized in that** said emitter entity is able to receive from said receiver terminal, an indication of said at least one reproduction format, to determine a mode of spatial encoding of the data which is compatible with an indicated reproduction format taken in the order of preference, and to indicate to the receiver terminal said reproduction format compatible with the mode of spatial encoding determined.
